# EUROPÄISCHE PATENTSCHRIFT

(11) **EP 1 619 418 B1**
(45) Veröffentlichungstag und Bekanntmachung des Hinweises auf die Patenterteilung: **20.01.2010**
(21) Anmeldenummer: 05012180.5
(22) Anmeldetag: 07.06.2005
(51) Int. Cl.: F16H 1/22, F16H 57/02, D21F 7/02

(54) **Getriebe mit Adapterstopfen**
Gear unit with an adapter plug
Unité d'entraînement avec bouchon d' adaptation

(30) Priorität: 23.07.2004 DE 202004011547 U
(43) Veröffentlichungstag der Anmeldung: 25.01.2006
(73) Patentinhaber: AS-Antriebstechnik und Service GmbH, 48734 Reken (DE)
(72) Erfinder: Kaspari, Gerd, Dipl.-Ing., 48653 Coesfeld (DE); Hesterwerth, Heinz, Dipl.-Ing., 48734 Reken (DE)
(74) Vertreter: Habbel, Ludwig

(56) Entgegenhaltungen:
- WO-A-01/20196
- DE-A1- 1 461 137
- FR-A- 2 547 007
- FR-A- 2 593 257
- JP-A- 3 140 656

## Beschreibung

Die Erfindung betrifft ein Getriebe nach dem Oberbegriff des Anspruchs 1.

Aus der JP 03 140656, die als nächstliegender Stand der Technik gegenüber Anspruch 1 angesehen wird, ist ein gattungsgemäßes Getriebe bekannt. Je nach Anzahl der gewünschten Ausgangswellen sind Getriebegehäuse mit der entsprechenden Anzahl von Öffnungen vorgesehen. Als in die Öffnungen eingesetzte Einsätze sind Lagerhülsen vorgesehen, durch welche die Ausgangswellen verlaufen, so dass die Ausgangswellen in Art einer so genannten "Halslagerung" gelagert sind. Aus der JP 03 140656 geht nicht hervor, dass die verwendeten Lagerhülsen - z. B. aufgrund einer besonders großen Wandstärke - jeweils die Anordnung der Ausgangswelle in einer anderen als zur Lagerhülse konzentrischen Weise erlauben würden, beispielsweise in einer Ausrichtung, die zur Längsachse bzw. Mittelachse der Lagerhülse achsparallel oder schräg verlaufen würde. Die Ausrichtung der Ausgangswellen ist daher von der Ausgestaltung des Gehäuses vorgegeben, in dessen Öffnungen die Lagerhülsen eingesetzt werden.

Aus der FR - A 2 593 257 ist ein gattungsgemäßes Getriebe bekannt. Das Getriebegehäuse ist mit einer standardisierten Anzahl von Öffnungen vorgesehen. Je nach Anzahl der erforderlichen Ausgangswellen sind die Öffnungen entweder mittels eines Deckels verschlossen oder mit einem Lagerdeckel versehen, der eines von zwei erforderlichen getriebeseitigen Lagern der jeweiligen Ausgangswelle aufnimmt. Ein zweites getriebeseitiges Lager der Ausgangswelle ist jenseits des auf der Ausgangswelle vorgesehenen Kegelrades vorgesehen. Unter "getriebeseitiges Lager" wird im Rahmen des vorliegenden Vorschlages die Lagerung der Ausgangswelle in dem vorschlagsgemäßen Getriebe verstanden, wobei die Ausgangswelle an ihrem anderen Ende ebenfalls gelagert sein kann, jedoch nicht in demselben Getriebe.

Gemäß der FR - A 2 593 257 sind als in die Öffnungen eingesetzte Einsätze die erwähnten Lagerdeckel vorgesehen. Aus der FR - A 2 593 257 geht nicht hervor, dass die verwendeten Lagerdeckel - z. B. aufgrund einer besonders großen Materialstärke - jeweils die Anordnung der Ausgangswelle in einer anderen als zur Lagerhülse konzentrischen Weise erlauben würden, beispielsweise in einer Ausrichtung, die zur Längsachse bzw. Mittelachse der Lagerhülse achsparallel oder schräg verlaufen würde. Die Ausrichtung der Ausgangswellen ist daher von der Ausgestaltung des Gehäuses vorgegeben, in dessen Öffnungen die Lagerdeckel eingesetzt werden.

Aus der DE 14 61 137 A1 ist Antrieb für die Trockenpartie von Papiermaschinen bekannt, bei welchem ein gattungsgemäßes Getriebe verwendbar ist. Eine verschließbare Öffnung des Getriebegehäuses ist in dieser Druckschrift ebenso wenig offenbart wie ein entsprechender Einsatz, und folglich sind dieser Druckschrift keine Angaben zur Dimensionierung und Ausgestaltung eines solchen Einsatzes entnehmbar.

Aus der WO 01/20196 A ist ein gattungsfremdes Getriebe bekannt. Eine Getriebeeingangs- und eine Getriebeausgangswelle sind vorgesehen, die beide jeweils ein Kegelrad aufweisen, wobei diese beiden Kegelräder miteinander im Eingriff sind. Beiderseits des auf der Ausgangswelle vorgesehenen Kegelrades sind Einsätze für Öffnungen im Getriebegehäuse vorgesehen, wobei jeder Einsatz ein getriebeseitiges Lager der Ausgangswelle aufweist. Da das Kegelrad der Ausgangswelle mit dem anderen Kegelrad kämmt, müssen die beiden Einsätze beiderseits des Ausgangswellen-Kegelrades ebenso angepasst werden wie die beiden Kegelräder selbst, wenn Ein- und Ausgangswelle in einem anderen Winkel zueinander ausgerichtet werden sollen. Als Vorteil ist in der WO 01/20196 A herausgestellt, dass ein standardisiertes Getriebegehäuse verwendet werden kann.

Aus der FR - A 2 547 007 ist ein gattungsgemäßes Getriebe bekannt. Das Getriebegehäuse ist mit einer standardisierten Anzahl von Öffnungen vorgesehen. Je nach Anzahl der erforderlichen Ausgangswellen sind die nicht benötigten Öffnungen mittels eines Deckels verschlossen. Zwei Lagerdeckel an gegenüberliegenden Seiten des Gehäuses sind zur Lagerung einer Eingangswelle vorgesehen, wobei jeder Lagerdeckel eines von zwei erforderlichen getriebeseitigen Lagern der Eingangswelle aufnimmt. Eine Lagerhülse ist vorgesehen, durch welche eine Ausgangswelle verläuft, so dass die Ausgangswelle in Art einer so genannten "Halslagerung" gelagert ist.

Aus der FR - A 2 547 007 geht nicht hervor, dass die verwendeten Lagerdeckel und Lagerhülsen - z. B. aufgrund besonders großer Wand- oder Materialstärken - jeweils die Anordnung der Welle in einer anderen als zum Lagerdeckel bzw. zur Lagerhülse konzentrischen Weise erlauben würden, beispielsweise in einer Ausrichtung, die zur Längsachse bzw. Mittelachse der Lagerhülse achsparallel oder schräg verlaufen würde. Die Ausrichtung der Ausgangswellen ist daher von der Ausgestaltung des Gehäuses vorgegeben, in dessen Öffnungen die Lagerdeckel eingesetzt werden.

Aus der Praxis sind Getriebe bekannt, die zur Leistungsverzweigung dienen und es ermöglichen, mehrere nachgeschaltete Verbraucher durch einen einzigen Motor anzutreiben. Im dem Bereich der Papierherstellung werden solche Getriebe beispielsweise benutzt, um mehrere Trockenzylinder durch einen Elektromotor anzutreiben.

Die unterschiedliche Ausgestaltung der jeweiligen Anlagen, bei denen die Getriebe eingesetzt werden sollen, erfordert eine aufwendige Anpassung der einzelnen Getriebe bzw. die Verwendung elastischer Verbindungselemente. Während die aufwendige Anpassung aus wirtschaftlichen Gründen nachteilig ist, ist bei der Verwendung elastischer Verbindungselemente nachteilig, dass diese lediglich einen bestimmten Toleranzspielraum auszugleichen in der Lage sind. Wird dieser Spielraum bereits für die korrekte Ausrichtung der einzelnen Wellen in Anspruch genommen, so können während des Betriebs der gesamten Anlage auftretende dynamische Belastungen, Absetzungen im Fundament, oder ähnliche Einflüsse dazu führen, dass das Kompensierungsmaß dieser elastischen Elemente überschritten wird, so dass anschließend eine Schädigung der Bauteile im weiteren Betrieb nicht auszuschließen ist.

Der Erfindung liegt die Aufgabe zugrunde, ein gattungsgemäßes Getriebe dahingehend zu verbessern, dass dieses mit vergleichsweise geringem Aufwand eine optimale Ausrichtung der Ausgangswellen in Anpassung an die jeweilige Anlage möglich ist, in welcher das Getriebe eingesetzt wird.

Diese Aufgabe wird durch ein Getriebe mit den Merkmalen des Anspruchs 1 gelöst.

Die Erfindung schlägt mit anderen Worten die Verwendung eines als Adapter dienenden Stopfens vor. Wenn das vorgeschlagene Getriebe anders als zur Leistungsverzweigung eingesetzt werden soll und lediglich mit einer einzigen Ausgangswelle versehen ist, dient dieser Stopfen lediglich als Gehäuseverschluss.

Bei Anordnung einer zweiten Ausgangswelle jedoch kann dieser Stopfen dadurch, dass er einen größeren Querschnitt aufweist als zur Durchführung der zweiten Ausgangswelle erforderlich ist, schräg durchbohrt werden, so dass diese zweite Ausgangswelle den Stopfen nicht nur exakt axial, sondern auch schräg dazu verlaufend durchsetzen kann. Ohne das Gehäuse des Getriebes zu ändern, kann die Winkelstellung der Ausgangswellen zueinander lediglich durch die entsprechende Bearbeitung des Stopfens gewählt und an die jeweiligen anlagentypischen Voraussetzungen angepasst werden. Im Verhältnis zu einer Änderung des Gehäuses selbst ist auf diese Weise eine geometrische Anpassung des Getriebes mit besonders einfachen Mitteln möglich Dadurch, dass die zweite Ausgangswelle getriebeseitig ausschließlich innerhalb des Stopfens gelagert ist, sind keine Nachbearbeitungen des Gehäuses erforderlich. Vielmehr wird einfach der entsprechend bearbeitete Stopfen verwendet, der die Lagerung der zweiten Ausgangswelle in dem Getriebe bereitstellt.

Das gleiche gilt bei nachträglichen Anpassungen des Getriebes, z. B. nachdem Absetzungen im Fundament stattgefunden haben: der bislang verwendete Stopfen kann auf vergleichsweise einfache und wirtschaftliche Weise gegen einen grundsätzlich gleichen Stopfen ersetzt werden, bei dem lediglich die Durchführung für die Ausgangswelle anders ausgerichtet ist als bei dem bislang verwendeten Stopfen, so dass bei Verwendung des neuen Stopfens die Ausgangswelle nun in einem anderen Winkel verläuft und spannungsfrei zu dem nächsten Maschinenelement geführt wird, z. B. zu einer Trockenwalze einer Papierherstellungsmaschine.

Vorteilhaft kann der Stopfen unmittelbar auch als Lagerbuchse für die zweite Ausgangswelle ausgestaltet sein, so dass der Stopfen nicht eine zusätzliche Lagerbuchse aufnehmen muss und dementsprechend der Spielraum der Winkelverstellbarkeit innerhalb der Abmessungen des Stopfens vergrößert wird. Zudem wird die Anzahl der erforderlichen Bauteile reduziert und die Anzahl von Fugen im Getriebegehäuse, welche die Gefahr von Leckagen bergen könnten, wird reduziert.

Vorteilhaft kann die Öffnung als Langloch ausgestaltet sein, wobei die Längsachse etwa in der Ebene liegt, in der auch das Tellerrad liegt, und wobei der Stopfen einen entsprechend länglichen Querschnitt aufweist in Anpassung an die Geometrie des Langlochs. Durch diese Querschnittslänglichkeit wird der Winkelspielraum vergrößert, in welchem die zweite Ausgangswelle an das Tellerrad anschließen kann bzw. in welchem die zweite zur ersten Ausgangswelle ausgerichtet sein kann.

Ein Ausführungsbeispiel der Erfindung wird anhand der rein schematischen Zeichnungen nachfolgend näher erläutert. Dabei zeigt
- Fig. 1: eine Seitenansicht auf einen Ausschnitt einer Maschine zur Papierherstellung,
- Fig. 2: einen Schnitt durch ein vorschlagsgemäßes Getriebe parallel zur Ebene des Tellerrades, und
- Fig. 3: einen Schnitt in zu Fig. 2 senkrechter Schnittrichtung.

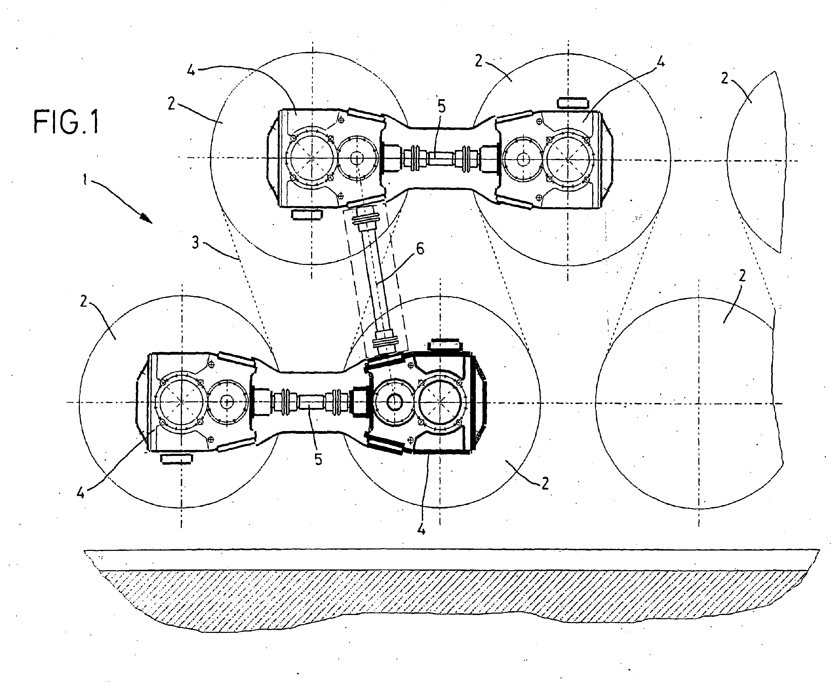

In Fig. 1 ist mit 1 eine Maschine zur Papierherstellung angedeutet, die lediglich ausschnittsweise dargestellt ist, wobei mehrere Trockenzylinder 2 erkennbar sind und eine um diese Trockenzylinder 2 umlaufende Papierbahn mit 3 angedeutet ist.

Die Trockenzylinder 2 sind jeweils durch ein Getriebe 4 angetrieben, wobei von den vier dargestellten Getrieben 4 das unten rechts dargestellte Getriebe 4 stärker konturiert gezeichnet ist. Dieses "Antriebs"-Getriebe 4 stellt den eigentlichen Antrieb für die Trockenzylinder 2 sicher und ist durch einen aus Fig. 1 nicht erkennbaren Elektromotor angetrieben. Dieses Getriebe 4 dient zur Leistungsverzweigung und treibt über eine erste Ausgangswelle 5 das Getriebe 4 und damit den Trockenzylinder 2 an, der in Fig. 1 links neben dem "Antriebs"-Getriebe 4 dargestellt ist.

Über eine schräg nach oben und links verlaufende zweite Ausgangswelle 6 ist der mittig über den beiden unteren Trockenzylindern 2 angeordnete Trockenzylinder 2 angetrieben, wobei dessen Getriebe 4 weiterhin auch das oben rechts dargestellte Getriebe 4 und damit den entsprechenden Trockenzylinder 2 antreibt.

Die Verbindung zwischen den beiden oberen Getrieben 4 erfolgt über eine ebenfalls als "erste Ausgangswelle 5" bezeichnete Welle. Da sowohl die beiden unteren als auch die beiden oberen Getriebe 4 jeweils horizontal nebeneinander angeordnet sind und dies in vielen Einsatzfällen der Getriebe 4, also bei anderen Anlagen- Konfigurationen ebenfalls der Fall ist, stellen diese zentrischen bzw. gradlinigen Anschlüsse der jeweils ersten Ausgangswelle 5 an das jeweilige Getriebe 4 einen "Normalfall" dar, so dass die Getriebegehäuse dementsprechend ausgestaltet sind und auf einen derartigen Anschluss der ersten Ausgangswelle 5 ausgelegt sind. Im Gegensatz dazu kann abhängig von der jeweiligen Konfiguration der Anlagen, in denen die Getriebe eingesetzt werden sollen, die Winkelstellung unterschiedlich sein, unter welcher die jeweils zweite Ausgangswelle 6 an das Getriebe 4 anschließt und in welcher die jeweils zweite Ausgangswelle 6 zu der jeweils ersten Ausgangswelle 5 ausgerichtet ist.

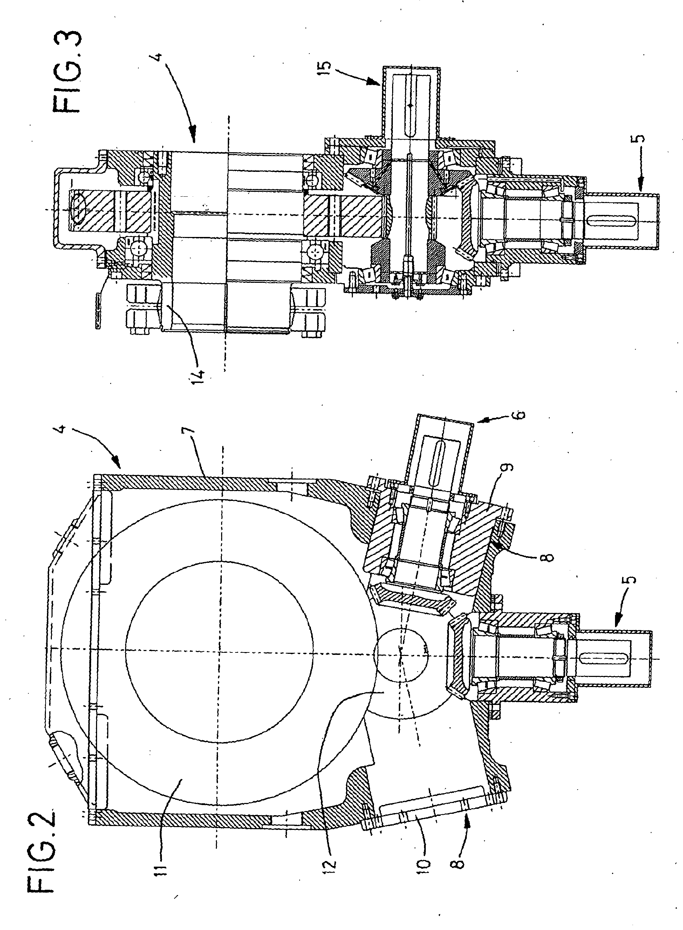

Aus Fig. 2 ist ersichtlich, dass in Anpassung an die gewünschte Winkelstellung die zweite Ausgangswelle 6 in unterschiedlichen Winkeln in das Getriebe 4 geführt sein kann: Das Getriebe 4 weist ein Gehäuse 7 auf, das einerseits fest für den axialen bzw. zentrischen Anschluss der ersten Ausgangswelle 5 ausgestaltet ist und ansonsten zwei Öffnungen 8 aufweist. Durch die rechts dargestellte dieser beiden Öffnungen 8 ist die zweite Ausgangswelle 6 geführt. Sie ist innerhalb eines Stopfens 9 gelagert, der die Lagerbuchse für die zweite Ausgangswelle 6 bildet und die Öffnung 8 verschließt. Die zweite Öffnung 8 ist durch einen einfachen Deckel 10 verschlossen, wobei der Deckel 10 entfernbar ist und durch diese zweite Öffnung 8 eine dritte Ausgangswelle geführt bzw. eingesetzt werden kann, beispielsweise unter Verwendung eines zweiten Stopfens 9.

Die Querschnittsabmessungen des Stopfens 9 sind - wie aus Fig. 2 ersichtlich ist - erheblich größer als zur Aufnahme und Lagerung der zweiten Ausgangswelle erforderlich ist. Es kann daher vorgesehen sein, die Ausgangswelle 6 in einem anderen Winkel als in Fig. 2 dargestellt durch den Stopfen 9 zu führen, so dass unterschiedliche Winkelstellungen zwischen der ersten und der zweiten Ausgangswelle 5 bzw. 6 auf einfache Weise verwirklicht werden können, indem Stopfen mit in dem entsprechenden Winkel ausgerichteten Durchgangsbohrungen verwendet werden.

In dem Gehäuse 7 ist ein als Zylinderrad 11 bezeichnetes Zahnrad angeordnet, welches den Trockenzylinder 2 antreibt und zur Befestigung einen aus Fig. 3 ersichtlichen Anschlussflansch 14 aufweist. Fig. 3 zeigt weiterhin eine Antriebswelle 15, welche mit einem nicht dargestellten Elektromotor verbunden ist und durch welche ein Tellerrad 12 angetrieben ist. Das Tellerrad 12 verteilt seine Leistung einerseits auf die beiden Ausgangswellen 5 und 6 und andererseits auf das Zylinderrad 11. Hierduch wird eine Leistungsverzweigung kurz nach dem Elektromotor erreicht, so dass die in Kraftflussrichtung nachgeschalteten Komponenten vergleichseise gering dimensioniert werden können, da sie lediglich einen Anteil der Motorleistung bewältigen müssen. Zudem kann eine weitere Leistungsverzweigung ggf. auf eine vorerwähnte weitere Ausgangswelle erfolgen, welche durch die zweite Öffnung 8 geführt werden kann.

## Patentansprüche

1. Getriebe (4) zur Leistungsverzweigung,
mit einer Eingangswelle und einem von der Eingangswelle angetriebenen Tellerrad (12),
und mit einer ersten Ausgangswelle (5), die mittels eines mit dem Tellerrad (12) kämmenden Kegelrades angetrieben ist, und mit einem das Tellerrad und das Kegelrad umgebenden Gehäuse (7),
wobei das Gehäuse (7) eine verschließbare Öffnung (8) aufweist,
sowie einen in die Öffnung (8) eingesetzten Einsatz,
wobei der Einsatz eine zweite Ausgangswelle (6) aufnimmt, die ebenfalls ein mit dem Tellerrad (12) kämmendes Kegelrad aufweist,
**dadurch gekennzeichnet,**
**dass** der Einsatz in Form eines als Adapter dienenden Stopfens (9) ausgestaltet ist,
wobei der Stopfen (9) einen größeren Querschnitt aufweist, als zur Durchführung der zweiten Ausgangswelle (6) erforderlich ist,
und **dass** die zweite Ausgangswelle (6) getriebeseitig ausschließlich innerhalb des Stopfens (9) gelagert ist,
derart, dass ohne Änderung des Getriebegehäuses (7) die Winkelstellung der Ausgangswellen (5, 6) zueinander lediglich durch die entsprechende Bearbeitung des Stopfens (9) wählbar ist.

2. Getriebe nach Anspruch 1, **dadurch gekennzeichnet, dass** der Stopfen (9) als Lagerbuchse für die zweite Ausgangswelle (6) ausgestaltet ist.

3. Getriebe nach Anspruch 1 oder 2,
**dadurch gekennzeichnet, dass** die Öffnung (8) als Langloch und der Stopfen (9) mit einem dementsprechend länglichen Querschnitt ausgestaltet ist.

4. Getriebe nach einem der vorhergehenden Ansprüche,
**dadurch gekennzeichnet, dass** das Getriebe Teil einer Maschine zur Papierherstellung ist.

## Claims

1. Gear unit (4) for power-splitting
having an input shaft and a ring gear (12) driven by the input shaft
having a first output shaft (5) which is driven by means of a bevel gear engaging with the ring gear (12)
having a housing (7) enclosing the ring gear and the bevel gear,
the housing (7) incorporates a closable opening (8)
an insert element inserted into the opening (8),
the insert element receives a second output shaft (6) which likewise incorporates a bevel gear engaging with the ring gear (12),
**characterised in that**
the insert element is constructed in the form of a plug (9) serving as an adapter,
where the plug (9) incorporates a larger cross-section than is needed to run the second output shaft (6) through
and the second output shaft (6) is mounted on the gear unit side completely inside the plug (9) so that without altering the gear unit housing (7) the angular position of the output shafts (5, 6) relative to each other can be selected simply by machining the plug (9) accordingly.

2. Gear unit in accordance with claim 1, **characterised in that** the plug (9) is constructed as a bearing bush for the second output shaft (6).

3. Gear unit in accordance with claim 1 or 2,
**characterised in that** the opening (8) is constructed as an oblong hole and the plug (9) is constructed with an oblong cross-section to match.

4. Gear unit in accordance with any of the foregoing claims, **characterised in that** the gear unit is part of a machine for manufacturing paper.

## Revendications

1. Unité d'entraînement (4) diviseuse de puissance,
comprenant un arbre d'entrée et une couronne (12) entraînée par l'arbre d'entrée,
et comprenant un premier arbre (5) de sortie entraîné au moyen d'une roue dentée conique engrenant avec la couronne (12),
et comprenant un carter (7) enveloppant la couronne et la roue dentée conique,
le carter (7) présentant un orifice (8) obturable,
ainsi qu'un insert placé dans l'orifice (8),
l'insert recevant un second arbre (6) de sortie présentant lui aussi une roue dentée conique engrenant avec la couronne (12),
**caractérisée en ce que**
l'insert présente une géométrie en forme de bouchon (9) servant d'adaptateur,
le bouchon (9) présentant une section plus forte que nécessaire pour faire passer le second arbre (6) de sortie;
et **en ce que** le second arbre (6) de sortie repose, côté unité d'entraînement, exclusivement à l'intérieur du bouchon (9),
de sorte que l'on peut, sans modifier le carter (7) de l'unité d'entraînement, choisir la position angulaire réciproque des arbres de sortie (5, 6) simplement en usinant le bouchon (9) de façon correspondante.

2. Unité d'entraînement selon la revendication 1, **caractérisée en ce que** le bouchon (9) a été configuré en douille de palier pour le second arbre (6) de sortie.

3. Unité d'entraînement selon la revendication 1 ou 2, **caractérisée en ce que** l'orifice (8) est configuré en trou oblong et que le bouchon (9) présente une section oblongue correspondante.

4. Unité d'entraînement selon l'une des revendications précédentes, **caractérisée en ce que** l'unité d'entraînement fait partie d'une machine dédiée à la fabrication du papier.
